(19) Europäisches Patentamt
European Patent Office
Office européen des brevets

(11) Publication number: **0 012 566**
**B1**

(12) # EUROPEAN PATENT SPECIFICATION

(45) Date of publication of patent specification: **22.06.83**

(51) Int. Cl.³: **H 02 K 3/30**, H 01 B 3/00, H 01 F 27/32

(21) Application number: **79302800.2**

(22) Date of filing: **05.12.79**

(54) **Electric windings and production thereof.**

(30) Priority: **08.12.78 JP 151152/78**

(43) Date of publication of application:
**25.06.80 Bulletin 80/13**

(45) Publication of the grant of the patent:
**22.06.83 Bulletin 83/25**

(84) Designated Contracting States:
**BE CH DE FR GB IT SE**

(56) References cited:
DE-B-1 102 265
FR-A-2 244 285
FR-A-2 384 337

(73) Proprietor: **Hitachi, Ltd.**
**5-1, Marunouchi 1-chome**
**Chiyoda-ku Tokyo 100 (JP)**

(72) Inventor: **Sakai, Masahiko**
**161-43 Ishinazakacho**
**Hitachi-shi (JP)**
Inventor: **Toyoda, Shinichi**
**2525-256 Mawatari**
**Katsuta-shi (JP)**
Inventor: **Narahara, Toshikazu**
**409-5 Muramatsu, Tokaimura**
**Naka-gun, Ibaraki-ken (JP)**
Inventor: **Hakamada, Takeshi**
**27-14 Nishinarusawacho-4-chome**
**Hitachi-shi (JP)**
Inventor: **Tsunoda, Tomoya**
**6-4-103 Nishinarusawacho-1-chome**
**Hitachi-shi (JP)**

(74) Representative: **Paget, Hugh Charles Edward et al,**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

**EP 0 012 566 B1**

# Electric windings and production thereof

This invention relates to a winding for an electric rotating machine having a plurality of layers of a sheet-form composite insulating material wrapped around a conductor and a cured resin impregnated into said layers, said cured resin being an epoxy isocyanate varnish, said sheet-form composite insulating material comprising two or more sheet-form insulating materials bonded by a binder. The invention also relates to a process for producing such a winding.

Recently, there has been a strong desire for electric windings having excellent thermal resistance, good electrical and mechanical properties, and good water resistance. This desire is related to the enlargement of capacity or miniaturization and weight saving in electric rotary machines and the like, or to the use of electric machines under severe conditions. In order to meet such demands, there has been proposed a process for producing electric windings having thermal resistance in the range of class H to class C by forming an insulating wrapping layer of glass-backed mica tape bonded by a silicone binder, impregnating the insulating wrapping layer with a solvent-less silicone resin varnish and curing it, but the resulting electric windings have been found insufficient in thermal resistance and water resistance.

In order to avoid such defects, the present inventors have proposed a process for producing electric windings by forming a composite insulating material using a condensation polymerization type silicone resin having hydroxyl groups in the molecule as a binder, impregnating the composite insulating material with an epoxy-isocyanate series resin and curing it into one piece (published after the present filing date as US—A—4222802). The condensation polymerization type silicone resin bonds individual insulating materials remarkably well by the action of the hydroxyl group and is an excellent binder. Since it has siloxane bonds in the backbone chain of the silicone resin, it has good thermal resistrance. Also since it is much more permeable to gas than other organic materials used for this purpose, it can release a gas out of the insulating layer even if the gas is generated by thermal deterioration, so that delamination of the insulating layers is hardly caused at all by storage of the gas. A further advantage of this resin type is that the hydroxyl groups of the silicone resin readily react with the isocyanate in the impregnating varnish of epoxy-isocyanate series resin to give a strongly bonded insulating layer.

Recently, however, it was found that electric windings so produced still have insufficient water resistance for practical use. This reason for this is not clear but it seems possible that heated unreacted hydroxyl groups bring about dehydration, dealcoholization, and dehydrogenation, which results in delamination of insulating layers and causes cracks.

In order to improve the water resistance, the combined use of a coupling agent and a surface active agent was examined but adequate results were not obtained.

It is an object of this invention to provide electric windings having Class H thermal resistance (180°C) or more and good water resistance.

The invention as claimed is intended to provide a solution. The binder of the invention is a mixture of a condensation polymerization type silicone resin containing hydroxyl groups in the molecule and an addition polymerization type silicone resin. More than one resin of each type may be included in the binder.

Since the addition polymerization type silicone resin used in this invention is cured by addition polymerization reaction of unsaturated groups (such as vinyl groups, allyl groups, etc.) with SiH groups, no by-product such as water is produced at the time of curing. Furthermore, since the addition polymerization type silicone resin has a lower crosslinking density than the condensation polymerization type silicone resin having hydroxyl groups, the former has larger gas permeability than the latter. On the other hand, the addition polymerization type silicone resin is inferior in bonding strength to individual insulating materials, which is unfavourable from the point of view of ease of wrapping. Also, the problem arises of delamination of insulating layers due to insufficient bonding strength after impregnation and curing of an epoxy-isocyanate series varnish. In addition, the addition polymerization type silicone resin is, on account of the vinyl groups in the molecule, easily deteriorated by heat compared with the condensation polymerization type silicone resin. This fault can be identified by weight loss on heating.

The present inventors have surprisingly found that the combined use of the addition polymerization type silicone resin and the condensation polymerization type silicone resin as a binder can remove the defects mentioned above.

The mixing ratio of the condensation polymerization type silicone resin and the addition polymerization type silicone resin in the binder can be selected in dependence on the ultimate use of the winding, but is preferably in the range of 50 to 95% by weight of the former and 50 to 5% by weight of the latter. When the amount of the addition polymerization type silicone resin is less than 5% by weight, improvement in water resistance may be small. On the other hand, if this amount is larger than 50% by weight, there is a tendency towards reduced thermal resistance and mechanical strength, which results in relatively easy delamination of the composite insulating layers.

The range of amounts of the mixed binder coated on the composite insulating material is not particularly limited, but taking workability, impregnating rate and properties of electric windings into consideration, it is desirable to use 1 to 40% by weight, more preferably 5 to 35% by weight of the

binder based on the total weight of the composite insulating material and the binder. More concretely, in the case of the combination of glass tape and mica tape as the composite insulating material, the use of 15 to 30% by weight of the binder, and in the case of the combination of a polyimide film and mica tape, the use of 10 to 25% by weight of the binder, are most effective.

The mixed binder of the addition polymerization type silicone resin and the condensation polymerization type silicone resin may further contain a conventional silane series coupling agent such as aminosilane, epoxysilane, etc. By adding such a silane coupling agent to the mixed binder, water resistance of the electric winding is improved and in addition mechanical strength of the tape itself is also improved.

The condensation polymerization type silicone resin containing hydroxyl groups used can be one obtained by conventional processes, e.g. by formulating silanes represented by the formulae, $RSiX_3$, $R_2SiX_2$ and $R_3SiX$, wherein R is hydrogen, an alkyl group such as methyl, ethyl, etc., an aromatic group, such as phenyl, tolyl, etc., and X is halogen or a group which can be hydrolyzed such as alkoxy, in a composition depending on desired properties, hydrolyzing the resulting composition with addition of water, carrying out partial dehydration condensation of the hydroxyl groups bonded to silicon atoms in the presence of heat or a catalyst, and increasing the degree of polymerization to a suitable value.

These silicone resins containing hydroxyl groups are available commercially. For example, there can preferably be used silicone resins KR—275 (hydroxyl group content 0.5—1% by weight), KR—272 (hydroxyl group content 2% by weight), KR—214 (hydroxyl group content 4% by weight) and KR—216 (hydroxyl group content 6% by weight), all of them being manufactured by Shin-etsu Silicone Co., Ltd., and SH 994 (hydroxyl group content 0.2—1% by weight manufactured by Toray Silicone K.K.) together with amine compound catalysts such as triethanolamine, etc. or organometallic salt catalysts such as zinc octoate, etc. It is preferable to use a silicone resin containing hydroxyl groups in an amount of 0.2—6% by weight and more preferably 0.2—1% by weight. The silicone resins can be used alone or as a mixture of two or more of them. Too high a hydroxyl group content makes the silicone resins solid at room temperature, so that this is not preferred from the viewpoint of workability.

As the addition polymerization type silicone resin, there can be used the following conventional materials:

(1) those involving polymerization of individual vinyl groups, and
(2) those involving addition polymerization of vinyl groups and hydrogen atoms.

Organopolysiloxanes containing vinyl groups used in the above materials (1) and (2) can be prepared by conventional processes. For example, a mixture of two or more of organochlorosilanes (such as dimethyldichlorosilane, diethyldichlorosilane, methylethyldichlorosilane, methylpropyldichlorosilane, methylbutyldichlorosilane, dipropyldichlorosilane, methylphenyldichlorosilane, ethylphenyldichlorosilane, diethylphenylchlorosilane, diphenyldichlorosilane, methyltrichlorosilane, ethyltrichlorosilane, propyltrichlorosilane, butyltrichlorosilane, phenyltrichlorosilane, and the like) and organochlorosilanes containing vinyl groups (such as vinyltrichlorosilane, methylvinyldichlorosilane, phenylvinyldichlorosilane, ethylvinyldichlorosilane, and the like) is subjected to co-hydrolysis, deacidification and dehydration condensation reactions to give organopolysiloxanes containing vinyl groups easily.

Organopolysiloxanes containing hydrogen atoms as necessary in the above material (2) can easily be prepared via hydrolysis, deacidification and dehydration condensation reactions as mentioned above from organochlorosilanes containing SiH groups such as methylhydrogendichlorosilane, ethylhydrogendichlorosilane, phenylhydrogendichlorosilane, propylhydrogendichlorosilane, butylhydrogendichlorosilane, and the like.

The organopolysiloxanes containing vinyl groups and organopolysiloxanes containing hydrogen atoms thus prepared are mixed with conventional catalysts such as peroxides or platinum to give cured addition polymerization type silicone resins. But in such cases, there is a tendency to give hard and brittle cured materials, which lowers their practical utility. In order to improve such a defect, for example, other kinds of organochlorosilanes such as monophenyltrichlorosilane, diphenyldichlorosilane, dimethyldichlorosilane, trimethylchlorosilane, and the like may be added to the abovementioned organochlorosilanes at the time of hydrolysis to give polymers via co-hydrolysis, deacidification and dehydration condensation reactions.

In order to impart desired properties to the thus prepared copolymers thus prepared when cured, it is necessary to add a catalyst thereto. The catalyst may be selected from conventional peroxides such as dicumyl peroxide, benzoyl peroxide, di-tertiary-butyl peroxide, etc. or rhodium or platinum series catalysts and the like. These catalysts may be used alone or as a mixture of two or more of them. The amount of the catalyst is, in the case of the peroxides, preferably 0.1 to 5.0% by weight based on the total weight of the oranopolysiloxanes and, in the case of rhodium and platinum series catalysts, preferably 0.1 to 100 ppm based on the total weight of the organopolysiloxanes.

As the insulating materials for producing the composite insulating material, there can be used organic and inorganic insulating materials. Preferable examples of the organic insulating materials are films containing at least one structural unit selected from aromatic polyamides, polyimides, polybenzoimidazoles, polyamide-imides, polyester-imides, polysulfones, poly-p-xylylenes, poly(phenylene oxide), poly(imidazopyrrolone ether), polyimidazopyrrolone, poly(p-phenylene

oxadiazole), polybenzothiazole, polytriazole, polyquinazolinedione, polybenzoxazinone, polyoxazolone, polyoxacyanine, polybenzoimidazole-imide, polyindophenazine, polybenzoxazolepyromellitimide, polyisoindroquinazolinedione, polymethylquinazoline, polybenzimidazoquinazoline, polyindolone, polyimidazobenzophenanthranoline, etc., nonwoven fabrics, paper and the like, taking thermal resistance into consideration. Examples of inorganic insulating materials are glass cloth, mica sheet, and the like. As the mica sheet, that obtained in the form of sheet from soft or hard mica without calcination or with calcination can be used.

The term "composite insulating material" used in this invention refers to that obtained by bonding two or more insulating materials mentioned above with the binder mentioned above. The combination of two or more insulating materials may be a combination of two or more insulating materials of the same kind or a combination of two or more insulating materials of different kinds. Examples of composite insulating materials are glass tape-backed mica sheet, polyimide film or polyamide-imide film-backed mica sheet etc.

As a polyimide which contains imide rings in the molecular structure, there can be used a reaction product of a tetracarboxylic acid anhydride and a diamine, a reaction product of a tetracaroxylic acid anhydride and a diisocyanate, a reaction product of bisphthalimide or bismaleimide and a diamine, a reaction product of bisphthalimide or bismaleimide and a vinyl compound, and the like. As the polyamideimide, there can be used a reaction product obtained by reacting a reaction product of an excess primary diamine and a dicarboxylic acid chloride, with a tetracarboxylic acid anhydride, a reaction product obtained by reacting a reaction product of a tetracarboxylic acid anhydride and an excess diamine, with a dicarboxylic acid chloride, a reaction product of a primary diamine and trimellitic acid anhydride, and the like. There can also be used polyesterimide compounds which can also be obtained from a reaction product of trimellitic acid anhydride with a diol as a precursor using the same procedure as mentioned in the case of obtaining the polyamideimide compounds. Among those polymers containing imide rings, from the viewpoints of availability, workability and physical and chemical properties, etc., Kapton (a polyimide film manufactured by E. I. du Pont de Nemours & Co.), Pifron II (a polyamide-imide film manufactured by Hitachi Chemical Co., Ltd.) and the like can preferably be used. The composite insulating material may be wrapped around an electrical conductor by a conventional method.

Subsequently, the wrapped composite insulating material is impregnated with an epoxy-isocyanate series resin varnish comprising a polyfunctional epoxy compound and a polyfunctional isocyanate compound with special proportions as disclosed in U.S. Patent No. 4,070,416.

As the polyfunctional epoxy compound used in the present invention, there can be used bifunctional epoxides such as, for example, diglycidyl ether of bisphenol A, butadiene diepoxide, 3,4-epoxycyclohexylmethyl-(3,4-epoxy)-cyclohexane carboxylate, vinylcyclohexene dioxide, 4,4′-di(1,2-epoxyethyl)-diphenylether, 4,4′-di(1,2-epoxyethyl)biphenyl, 2,2-bis(3,4-epoxycyclohexyl)propane, diglycidyl ether of resorcinol, diglycidyl ether of phloroglucinol, diglycidyl ether of methylphloroglucinol, bis(2,3-epoxycyclopentyl)ether, 2-(3,4-epoxy)cyclohexane-5,5-spiro(3,4-epoxy)-cyclohexane-m-dioxane, bis(3,4-epoxy-6-methylcyclohexyl)adipate, N,N′-m-phenylenebis(4,5-epoxy-1,2-cyclohexane-dicarboxyimide) and the like; and tri- or more functional epoxy compounds such as triglycidyl ether of p-aminophenol, polyallylglycidyl ether, 1,3,5-tri(1,2-epoxyethyl)-benzene, 2,2′,4,4′-tetraglycidoxybenzophenone, tetraglycidoxytetraphenylethane, polyglycidyl ether of phenol-formaldehyde novolac, polyglycidyl ether of cresol-formaldehyde novolac, triglycidyl ether of glycerol, triglycidyl ether of trimethylolpropane and the like. As to other epoxy compounds, a book entitled "Epoxy Resins" (American Chemical Society, 1970) written by Henry Lee and a book entitled "Handbook of Epoxy Resin" (McGraw Hill Book Co., 1967) written by Henry Lee and K. Neville contain descriptions of the resins.

Among the aforesaid polyfunctional epoxides, diglycidyl ether of bisphenol A and the polyglycidyl ether of phenol-formaldehyde novolac have particularly good reactivity. Therefore, they are useful compounds. Further, halides of these compounds can be used.

As the polyfunctional isocyanate compounds, there can be used bifunctional isocyanates, such as, for example, methane diisocyanate, butane-1,1-diisocyanate, ethane-1,2-diisocyanate, butane-1,2-diisocyanate, transvinylene diisocyanate, propane-1,3-diisocyanate, butane-1,4-diisocyanate, 2-butene-1,4-diisocyanate, 2-methylbutane-1,4-diisocyanate, pentane-1,5-diisocyanate, 2,2-dimethylpentane-1,5-diisocyanate, hexane-1,6-diisocyanate, heptane-1,7-diisocyanate, octane-1,8-diisocyanate, nonane-1,9-diisocyanate, decane-1,10-diisocyanate, dimethylsilane diisocyanate, diphenylsilane diisocyanate, $\omega,\omega'$-1,3-dimethylbenzene diisocyanate, $\omega,\omega'$-1,4-dimethylbenzene diisocyanate, $\omega,\omega'$-1,3-dimethylcyclohexane diisocyanate, $\omega,\omega'$-1,4-dimethylcyclohexane diisocyanate, $\omega,\omega'$-1,4-dimethylbenzene diisocyanate, $\omega,\omega'$-1,4-dimethylnaphthalene diisocyanate, $\omega,\omega'$-1,5-dimethylnaphthalene diisocyanate, cyclohexane-1,3-diisocyanate, cyclohexane-1,4-diisocyanate, dicyclohexylmethane-4,4′-diisocyanate, 1,3-phenylene diisocyanate, 1,4-phenylene diisocyanate, 1-methylbenzene-2,4-diisocyanate, 1-methylbenzene-2,5-diisocyanate, 1-methylbenzene-2,6-diisocyanate, 1-methylbenzene-3,5-diisocyanate, diphenylether-4,4′-diisocyanate, diphenylether-2,4-diisocyanate, naphthalene-1,4-diisocyanate, naphthalene-1,5-diisocyanate, biphenyl-4,4′-diisocyanate, 3,3′-dimethylbiphenyll-4,4′-diisocyanate, 2,3′-dimethoxybiphenyl-4,4′-diisocyanate, diphenylmethane-4,4′-diisocyanate, 3,3′-dimethoxydiphenylmethane-4,4′-diisocyanate, 4,4′-

dimethoxydiphenylmethane-3,3′-diisocyanate, diphenylsulfide-4,4′-diisocyanate, diphenylsulfone-4,4′-diisocyanate and the like; and trifunctional or more isocyanates, such as, for example, polymethylene-polyphenylisocyanate, triphenylmethanetriisocyanate, tris(4-isocyanatephenyl)thiophosphate), 3,3′,4,4′-diphenylmethanetetraisocyanate and the like.

Further, dimers and trimers of the foregoing polyisocyanates are useful. The dimers and trimers are terminated by free isocyanate groups and contain one or more isocyanurate rings or uretdione rings, or both. Methods of preparing various kinds of trimers and uretdiones are disclosed in U.S. Patent No. 3,494,888; U.S. Patent No. 3,108,100; and U.S. Patent No. 2,977,370, etc.

The proportions of the epoxy compound and the isocyanate compound in the insulating varnish should preferably be within limited ranges in order to impart good thermal resistance to the cured article. These proportions are 1.5 equivalents or more of the isocyanate compound per equivalent of the epoxy compound. If the proportion of the isocyanate compound is less than 1.5 equivalents, sufficient thermal resistance may not be obtained. A more preferred range is 2.5—25 equivalents of the isocyanate compound per equivalent of the epoxy compound. If the proportion of the isocyanate compound is more than 25 equivalents, the resulting cured article may not have good balance of weight loss by heating, electrical properties, mechanical properties, etc., which may result in reduction in the insulation properties of the electric winding.

In order to accelerate curing of the epoxy-isocyanate series resin varnish, it is necessary to use a catalyst. As these catalysts, organic compounds having in the molecule at least one atom selected from the elements belonging to the group Va in the periodic table are useful.

Examples of suitable catalysts are tertiary amines such as trimethylamine, triethylamine, tetramethylbutanediamine, tetramethylpentanediamine, tetramethylhexanediamine, triethylene-diamine, N,N-dimethylaniline, etc.; oxyalkylamines such as dimethylaminoethanol, dimethylaminopentanol, etc.; amines such as tris(dimethylaminomethyl)phenol, N-methyl-morpholine, N-ethylmorpholine, etc.; quaternary ammonium salts such as cetyltrimethylammonium bromide, cetyltrimethylammonium chloride, dodecyltrimethylammonium iodide, trimethyldodecylammonium chloride, benzyldimethyltetradecylammonium chloride, benzyldimethylpalmityl-ammonium chloride, allyldodecyltrimethylammonium bromide, benzyldimethylstearylammonium bromide, benzyldimethyltetradecylammonium acetate, etc.; imidazoles such as 2-methylimidazole, 2-ethylimidazole, 2-undecylimidazole, 2-heptadecylimidazole, 2-methyl-4-ethylimidazole, 1-butylimidazole, 1-propyl-2-methylimidazole, 1-benzyl-2-methylimidazole, 1-cyanoethyl-2-methylimidazole, 1-cyanoethyl-2-undecylimidazole, 1-cyanoethyl-2-phenylimidazole, 1-(4,6-diamino-s-triazinyl)-2-ethyl)-2-ethylimidazole, 1-(4,6-diamino-s-triazinyl-2-ethyl)-2-phenylimidazole, 1-(4,6-diamino-s-triazinyl-2-ethyl)-2-isopropylimidazole, 2-phenylimidazole, 1-(4,6-diamino-s-triazinyl-2-ethyl)-2-ethylimidazole, 1-(4,6-diamino-s-triazinyl-2-ethyl)-2-methylimidazole, 1-(4,6-diamino-s-triazinyl-2-ethyl)-2-undecylimidazole, etc.; tetra-substituted borate type compounds of nitrogen phosphorus, arsenic, antimony and bismuth such as

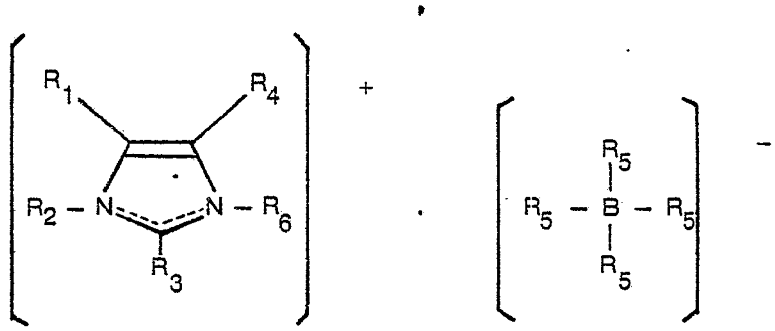
,

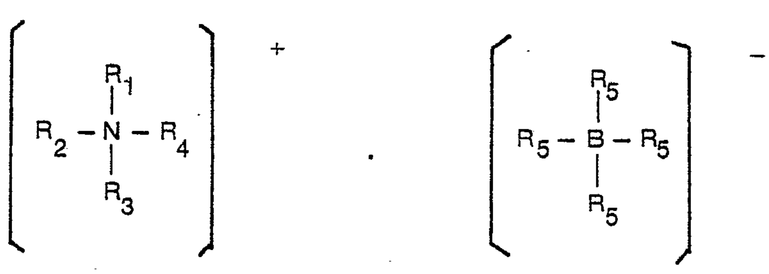
,

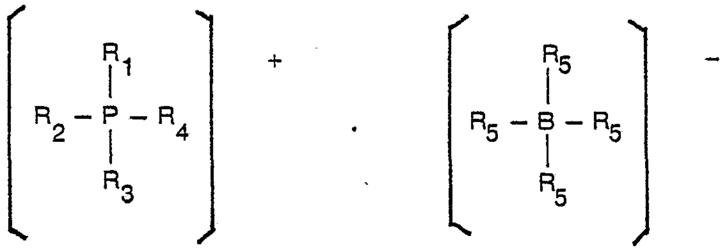,

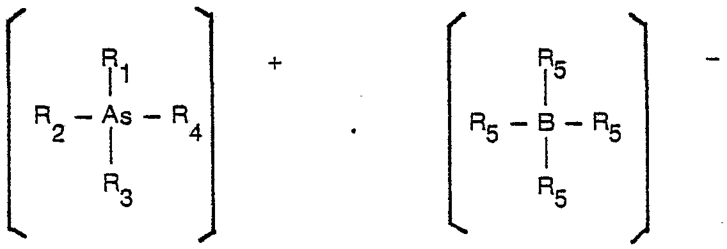,

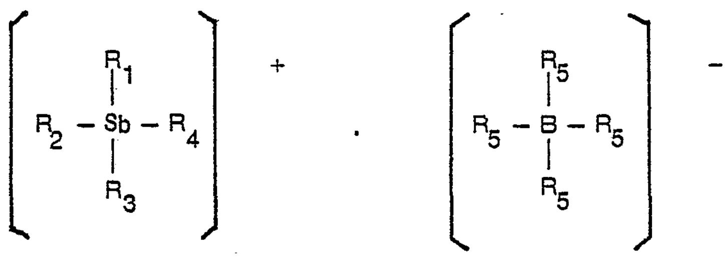,

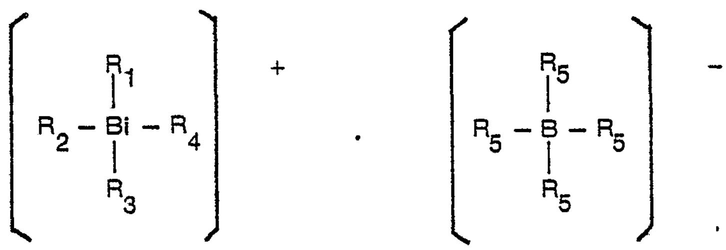,

wherein $R_1$, $R_2$, $R_3$, $R_4$ and $R_6$ are independently hydrogen, an alkyl group having 1 to 5 carbon atoms, an alkenyl group having 2 to 6 carbon atoms, a phenyl group, or a substituted phenyl group such as a $C_{1-4}$ alkyl-substituted phenyl group, a $C_{1-4}$ alkoxy-substituted phenyl group, and $R_5$ is a phenyl group, or a substituted phenyl group such as a $C_{1-4}$-alkyl-substituted phenyl group, a $C_{1-4}$ alkoxy-substituted phenyl group.

Among these, those having nitrogen or phosphorus are particularly useful from the viewpoints of availability and workability.

The catalysts are preferably used in an amount of 0.01 to 10% by weight based on the weight of the insulating epoxy-isocyanate series resin varnish. If the amount of the catalyst is outside the above-mentioned range, the resulting cured article shows a greater tendency to become brittle or to generate a gas due to thermal degradation.

In some cases, the catalyst for the insulating varnish may be mixed with the silicone resin mixed binder and added to the insulating materials prior to the impregnation with the insulating varnish.

The epoxy-isocyanate series resin varnish may preferably contain a polymerization inhibitor in order to prolong its pot life. Such a polymerization inhibitor is illustrated in, e.g., U.S. Patgent No. 4,129,554.

This invention is illustrated in more detail by way of the following Examples in which all parts and percents are by weight unless otherwise specified.

Examples 1—3

(1) Preparation of a composite insulating material

A binder solution was prepared by mixing 95% (as nonvolatile content) of a condensation polymerization type silicone resin containing hydroxyl groups (hydroxyl group content 1%; a 50% solution of

KR—272 manufactured by Shin-etsu Silicone Co., Ltd.) and 5% (as nonvolatile content) of an addition polymerization type silicone resin A (a copolymer of 40% by mole of monophenylsiloxane unit, 15% by mole of vinylmethylsiloxane unit and 45% by mole of dimethylsiloxane unit, containing 1.5% of dicumyl peroxide based on the weight of the copolymer) and diluting the mixture with toluene so as to make the nonvolatile content 50%.

Using the binder solution thus prepared, uncalcined soft assembly mica sheet and glass cloth were bonded and the solvent was removed by evaporation. In this way there were prepared three kinds of glass-backed assembly mica tape (composite insulating materials) containing binder in an amount of 5, 20 and 35% as nonvolatile content based on the total weight of the composite insulating material. The resulting insulating materials were cut to give composite tapes 25 mm wide.

(2) Preparation of an impregnating varnish

An impregnating varnish of epoxy-isocyanate series resin was prepared by mixing 100 parts of diglycidyl ether of bisphenol A (DER—332 manufactured by Dow Chemical Co., epoxy equivalent 175), 400 parts of liquid diphenylmethane diisocyanate (Desmodur CD manufactured by Bayer A. G., isocyanate equivalent 140) (hereinafter referred to as "L—MDI") and 3.0 parts of 2-ethyl-4-methylimidazole.

(3) Production of electric winding

The composite insulating material prepared in (1) above was wrapped around a bare electric conductor. The resulting winding was vacuum impregnated under pressure with the impregnating varnish prepared in (2) above and then cured at 100°—150°C. for 20 hours and at 200°—220°C for 4 hours with heating.

Water resistance and thermal resistance of the resulting windings were tested in the following manner. The attached drawing is a fragmentary view in perspective, showing part of an electric winding used for the tests, wherein the conductor 1 is wrapped with the insulating layer 2 which has been impregnated with the varnish and cured to become one piece.

(a) Thermal resistance test

The electric winding was heated at 270°C for 24 hours and subsequently was placed under a temperature of 40°C and a relative humidity of 95% for 24 hours. This procedure was defined as one cycle and repeated 10 times. At the end of each cycle, dielectric loss tangent (tan $\delta$) and insulation resistance (Meg.) were measured. The results are as shown in Table 1.

(b) Short time thermal resistance test

A specimen of 50 x 50 mm was cut out of the insulating layer of the electric winding mentioned above and heated at 270°C for 10 days to measure weight loss due to thermal deterioration. The results are as shown in Table 1 (under "weight loss (%)")

(c) Water resistance test

A specimen 10 mm wide and 60 mm long was cut out of the insulating layer of the electric winding mentioned above along the direction of wrapping of the tape. The specimen was supported at two points at a distance of 40 mm apart with loading at the center to measure flexural strength at 25°C. After immersing the specimen in water at 40°C for 24 hours, flexural strength of the specimen thus treated was measured in the same manner. The results are as shown in Table 1.

## Examples 4—6

Binder solutions were prepared in the same manner as described in Example 1 except for changing the mixing ratio of condensation polymerization type silicone resin containing hydroxyl groups to addition polymerization type silicone resin to 90%:10%, 80%:20% or 50%:50%. Using each of these binder solutions, uncalcined soft assembly mica sheet and glass cloth were bonded so that the coating amount of the binder became 20% as nonvolatile content (based on the total weight). The sheet was cut to give a glass-backed mica tape 25 mm wide.

Using the glass-backed mica tape, an electric winding was produced in the same manner as described in Example 1 and its thermal resistance, short time thermal resistance and water resistance were tested in the same manner as described in Example 1. The results are as shown in Table 1.

## Examples 7—9

To 100 parts of a 50% solution of a condensation polymerization type silicone resin containing hydroxyl group (KR—275 manufactured by Shin-etsu Silicone Co., Ltd.), 5 parts of an amine curing catalyst (D—275 manufactured by Shin-etsu Silicone Co., Ltd.) were added. To the resulting mixture, the same addition polymerization type silicone resin as used in Example 1 was added so that the mixing ratio of the condensation polymerization type to the addition polymerization type became 80% to 20%. The resulting mixture was diluted with toluene to give a binder solution having 50% of total nonvolatile content.

Using the binder solution thus prepared, three glass-backed mica tapes were prepared in the same manner as described in Examples 1—3 and with each an electric winding was produced in the same manner as described in Example 1. Thermal resistance, short time thermal resistance and water

resistance were tested in the same manner as described in Example 1. The results are as shown in Table 1.

Example 10

To the same binder composition as used in Example 8, 2-ethyl-4-methylimidazole (manufactured by Shikoku Kasei Co., Ltd., hereinafter referred to as "2E4MZ"), which is a curing catalyst for the epoxy-isocyanate series resin impregnating varnish, was added and glass-backed mica tape was prepared in the same manner as described in Example 8. The catalyst content was 3 g per $m^2$ of the tape area.

The tape thus prepared was wrapped around an electric conductor to form an insulating layer, which was vacuum impregnated under pressure with the same impregnating varnish as used in Example 1 except that the varnish did not contain a curing catalyst and an electric winding was produced in the same manner as described in Example 1. Thermal resistance, short time thermal resistance and water resistance were tested in the same manner as described in Example 1. The results are as shown in Table 1.

Example 11

To the same silicone resin binder as used in Example 8, a silane coupling agent, $\gamma$-aminopropyltriethoxysilane ($NH_2CH_2CH_2CH_2Si(OC_2H_5)_3$) (A—1100 manufactured by Union Carbide Corp.) was added in an amount of 0.5 g per $m^2$ of glass-backed mica tape to be prepared. Using the binder solution containing the silane coupling agent thus prepared, glass-backed mica tape was prepared (the silicone resin binder content as nonvolatile content in the tape, 20%) and an electric winding was produced in the same manner as described in Example 1. Thermal resistance, short time thermal resistance and water resistance were tested in the same manner as described in Example 1. The results are as shown in Table 1.

Examples 12 and 13

Binder solutions were prepared by mixing 90% and 80% (as nonvolatile content) of silicone resin containing hydroxyl groups (a 50% solution of SH 994 manufactured by Toray Silicone K.K., hydroxyl group content of SH 994 0.2—1%) with 10% and 20% (as nonvolatile content) of the same addition polymerization type silicone resin as used in Example 1.

Using each of these binder solutions, glass-backed mica tape wherein the binder content in the tape as nonvolatile content was 20% based on the total weight was prepared. Electric windings were produced by using these glass-backed mica tape and tested in the same manner as described in Example 1. The results of thermal resistance, short time thermal resistance and water resistance are shown in Table 1.

Examples 14—16

A binder solution was prepared by mixing 80% (as nonvolatile content) of a condensation polymerization type silicone resin containing hydroxyl groups (KR—275) together with an amine curing catalyst (D—275 manufactured by Shin-etsu Silicone Co., Ltd.) in an amount of 5 parts per 100 parts of the hydroxyl group containing silicone resin with 20% (as nonvolatile content) of an addition polymerization type silicone resin B (a copolymer of 30% by mole of monophenylsiloxane unit, 5% by mole of diphenylsiloxane unit, 20% by mole of dimethylsiloxane unit, 10% by mole of methylvinylsiloxane unit, 25% by mole of methylhydrogensiloxane unit and 10% by mole of diphenylvinylsiloxane unit together with 10 ppm of a platinum catalyst) and diluting the mixture with toluene so as to make the nonvolatile content 50%.

Using the binder solution thus prepared uncalcined soft assembly mica sheet and glass cloth were bonded and the solvent was removed by evaporation. Thus, three glass-backed assembly mica tapes (composite insulating materials) containing respectively binder in an amount of 5, 20 and 35% as nonvolatile content based on the total weight of the compososite insulating material were prepared. The resulting insulating materials were cut to give complete tapes 25 mm wide.

An impregnating varnish of epoxy-isocyanate series resin was prepared by mixing 100 parts of diglycidyl ether of bisphenol A (DER—332 used in Example 1), 800 parts of liquid diphenylmethane diisocyanate (L—MDI) and 4.5 parts of 1-cyanoethyl-2-phenylimidazole (manufactured by Shikoku Kasei Co., Ltd.) (hereinafter referred to as "2PZ—CN"). Using the glass-backed mica tapes and the impregnating varnish thus prepared, electric windings were produced and tested in the same manner as described in Example 1.

The results of thermal resistance, short time thermal resistance and water resistance are as shown in Table 1.

Examples 17 and 18

Using the same binder solution as used in Example 14 containing 80% of the hydroxyl group containing silicone resin and 20% of the addition polymerization type silicone resin, and as insulating materials polyimide film (Kapton, a trade mark, manufactured by E. I. du Pont de Nemours & Co.) and

uncalcined soft mica sheet, a composite insulating material was prepared by coating the binder solution on the insulating materials so as to make the binder content 20% (based on the total weight) and removing the solvent by evaporation. (Example 17).

Using as insulating materials polyamide nonwoven fabric (Nomex 410 manufactured by E. I. du Pont de Nemours & Co.) and uncalcined soft mica sheet and the same binder solution as used in Example 14 mentioned above, a composite insulating material was prepared by coating the binder solution on the insulating materials so as to make the binder content 20% (based on the total weight) and removing the solvent by evaporation. (Example 18).

Using each composite insulating tape thus prepared and the same impregnating varnish of epoxy-isocyanate series varnish as used in Example 14, electric windings were produced and tested in the same manner as described in Example 1.

The results of thermal resistance, short time thermal resistance and water resistance are as shown in Table 1.

## Comparative Examples 1—5

As the binder, condensation polymerization type silicone resins containing hydroxyl groups or addition polymerization type silicone resins were used alone. As the impregnating varnish, a mixture of 100 parts of DER—332, 400 parts of L—MDI and 2.5 parts of 2PZ—CN was used. Electric windings were produced according to Example 2 but curing conditions of 160°C for 2 hours and 200°C for 15 hours were employed. Thermal resistance, short time thermal resistance and water resistance of the electric windings were tested in the same manner as described in Example 1. The results are as shown in Table 1.

As is clear from the results in Table 1, the electric windings produced by using the silicone binder according to this invention are superior to those produced by using a condensation polymerization type silicone resin containing hydroxyl groups or an addition polymerization type silicone resin alone as a binder for insulating materials.

TABLE 1

| Example No. | | | 1 | 2 | 3 |
|---|---|---|---|---|---|
| Silicone resin binder | Hydroxyl group containing silicone resin (%) | KR–272 | 95 | 95 | 95 |
| | | KR–275 | – | – | – |
| | | SH–994 | – | – | – |
| | Addition polymerization type silicone resin (%) | A | 5 | 5 | 5 |
| | | B | – | – | – |
| Coupling agent (A–1100) ($g/m^2$) | | | – | – | – |
| Composite insulating material | | | G–U | G–U | G–U |
| Binder content in the composite insulating material (%) | | | 5 | 20 | 35 |
| Impregnating varnish (parts) | Isocyanate | L–MDI | 400 (2.86 eq.) | 400 (2.86 eq.) | 400 (2.86 eq.) |
| | Epoxy resin | DER–332 | 100 (0.57 eq.) | 100 (0.57 eq.) | 100 (0.57 eq.) |
| | Curing catalyst | 2E4MZ | 3.0 | 3.0 | 3.0 |
| | | 2PZ–CN | – | – | – |

TABLE 1 (Continued)

| 4 | 5 | 6 | 7 | 8 | 9 | 10 * |
|---|---|---|---|---|---|---|
| 90 | 80 | 50 | — | — | — | — |
| — | — | — | 80 | 80 | 80 | 80 |
| — | — | — | — | — | — | — |
| 10 | 20 | 50 | 20 | 20 | 20 | 20 |
| — | — | — | — | — | — | — |
| — | — | — | — | — | — | — |
| G–U | G–U | G–U | G–U | G–U | G–U | G–U |
| 20 | 20 | 20 | 5 | 20 | 35 | 20 |
| 400 (2.86 eq.) | 400 (2.86 eq.) | 400 (2.86 eq.) | 400 (2.86 eq.) | 400 (2.86 eq.) | 400 (2.86 eq.) | 400 (2.86 eq.) |
| 100 (0.57 eq.) | 100 (0.57 eq.) | 100 (0.57 eq.) | 100 (0.57 eq.) | 100 (0.57 eq.) | 100 (0.57 eq.) | 100 (0.57 eq.) |
| 3.0 | 3.0 | 3.0 | 3.0 | 3.0 | 3.0 | 3.0 |
| — | — | — | — | — | — | — |

TABLE 1 (Continued)

| 11 | 12 | 13 | 14 | 15 | 16 | 17 |
|---|---|---|---|---|---|---|
| — | — | — | — | — | — | — |
| 80 | — | — | 80 | 80 | 80 | 80 |
| — | 90 | 80 | — | — | — | — |
| 20 | 10 | 20 | — | — | — | — |
| — | — | — | 20 | 20 | 20 | 20 |
| 0.5 | — | — | — | — | — | — |
| G–U | G–U | G–U | G–U | G–U | G–U | K–U |
| 20 | 20 | 20 | 5 | 20 | 35 | 20 |
| 400 (2.86 eq.) | 400 (2.86 eq.) | 400 (2.86 eq.) | 400 (5.72 eq.) | 800 (5.72 eq.) | 800 (5.72 eq.) | 800 (5.72 eq.) |
| 100 (0.57 eq.) | 100 (0.57 eq.) | 100 (0.57 eq.) | 100 (0.57 eq.) | 100 (0.57 eq.) | 100 (0.57 eq.) | 100 (0.57 eq.) |
| 3.0 | 3.0 | 3.0 | — | — | — | — |
| — | — | — | 4.5 | 4.5 | 4.5 | 4.5 |

TABLE 1 (Continued)

| 18 | Comparative Example 1 | Comparative Example 2 | Comparative Example 3 | Comparative Example 4 | Comparative Example 5 |
|---|---|---|---|---|---|
| – | 100 | – | – | – | – |
| 80 | – | 100 | – | – | – |
| – | – | – | 100 | – | – |
| – | – | – | – | 100 | – |
| 20 | – | – | – | – | 100 |
| – | – | – | – | – | – |
| N–U | G–U | G–U | G–U | G–U | G–U |
| 20 | 20 | 20 | 20 | 20 | 20 |
| 800 (5.72 eq.) | 400 (2.86 eq.) | 400 (2.86 eq.) | 400 (2.86 eq.) | 400 (2.86 eq.) | 400 (2.86 eq.) |
| 100 (0.57 eq.) | 100 (0.57 eq.) | 100 (0.57 eq.) | 100 (0.57 eq.) | 100 (0.57 eq.) | 100 (0.57 eq.) |
| – | – | – | – | – | – |
| 4.5 | 2.5 | 2.5 | 2.5 | 2.5 | 2.5 |

TABLE 1 (Continued)

| Example No. | | | | 1 | 2 | 3 |
|---|---|---|---|---|---|---|
| Properties | Thermal resistance test | Initial time | tan $\delta$ (%) | 1.8 | 1.5 | 1.3 |
| | | | Meg. (MΩ) | ∞ | ∞ | ∞ |
| | | After 5 cycles | tan $\delta$ (%) | 11.3 | 12.2 | 13.5 |
| | | | Meg. (MΩ) | ∞ | ∞ | ∞ |
| | | After 10 cycles | tan $\delta$ (%) | 15.9 | 11.1 | 13.3 |
| | | | Meg. (MΩ) | 800 | ∞ | ∞ |
| | Weight loss (%), 270°C /10 days | | | 7.1 | 7.6 | 7.9 |
| | Water resistance test | Retention of flexural strength after immersed in water at 40°C for 24 hours (%) | | 45 | 49 | 58 |

TABLE 1 (Continued)

| 4 | 5 | 6 | 7 | 8 | 9 | 10 * |
|---|---|---|---|---|---|---|
| 1.4 | 1.3 | 1.6 | 1.4 | 1.4 | 1.4 | 1.3 |
| ∞ | ∞ | ∞ | ∞ | ∞ | ∞ | ∞ |
| 13.8 | 12.1 | 15.5 | 12.2 | 12.2 | 13.5 | 11.1 |
| ∞ | ∞ | ∞ | ∞ | ∞ | ∞ | ∞ |
| 10.1 | 9.9 | 9.6 | 11.5 | 10.1 | 10.8 | 10.8 |
| ∞ | ∞ | ∞ | 1000 | ∞ | ∞ | ∞ |
| 7.5 | 8.8 | 10.3 | 7.3 | 7.5 | 8.1 | 7.7 |
| 80 | 87 | 97 | 60 | 87 | 80 | 86 |

TABLE 1 (Continued)

| 11 | 12 | 13 | 14 | 15 | 16 | 17 |
|---|---|---|---|---|---|---|
| 1.2 | 1.2 | 1.2 | 1.5 | 1.4 | 1.5 | 1.1 |
| ∞ | ∞ | ∞ | ∞ | ∞ | ∞ | ∞ |
| 10.5 | 11.4 | 11.6 | 12.2 | 12.8 | 13.3 | 10.5 |
| ∞ | ∞ | ∞ | ∞ | ∞ | ∞ | ∞ |
| 12.5 | 11.6 | 10.6 | 16.2 | 12.2 | 12.9 | 9.6 |
| ∞ | ∞ | ∞ | 1000 | ∞ | ∞ | ∞ |
| 8.4 | 7.2 | 7.8 | 6.8 | 7.2 | 7.5 | 6.2 |
| 92 | 82 | 96 | 61 | 86 | 86 | 85 |

TABLE 1 (Continued)

| 18 | Comparative Example 1 | Comparative Example 2 | Comparative Example 3 | Comparative Example 4 | Comparative Example 5 |
|---|---|---|---|---|---|
| 1.4 | 1.7 | 1.6 | 1.2 | 2.1 | 2.2 |
| ∞ | ∞ | ∞ | ∞ | ∞ | ∞ |
| 12.8 | 18.6 | 17.3 | 16.5 | 19.9 | 20.1 |
| 100 | 100 | 100 | 100 | 80 | 50 |
| 10.5 | 22.7 | 21.5 | 20.2 | 22.5 | 24.5 |
| 500 | 80 | 80 | 80 | 5 | 5 |
| 10.3 | 7.3 | 6.5 | 7.8 | 19.6 | 20.5 |
| 96 | 33 | 35 | 37 | 90 | 94 |

Note)

G–U : Glass cloth and uncalcined soft assembly mica

2E4MZ: 2-Ethyl-4-methylimidazole

2PZ–CN: 1-Cyanoethyl-2-phenylimidazole

* : In Example 10, a catalyst for the impregnating varnish is previously mixed with the silicone resin binder

A–1100: γ-Aminopropyltriethoxysilane

K–U : Polyimide film and uncalcined soft assembly mica

N–U : Polyamide unwoven fabric and uncalcined soft assembly mica

Example 19

A binder solution was prepared by mixing 80% (as nonvolatile content) of a condensation polymerization type silicone resin containing hydroxyl groups (a 50% solution of KR—275) and 20% (as nonvolatile content) of an addition polymerization type silicone resin A (the same composition as used in Example 1 but containing 0.5% of dicumyl peroxide as catalyst) and diluting the mixture with toluene so as to make the nonvolatile content 50%.

Using the binder solution thus prepared, assembly mica sheet and glass cloth were bonded and the solvent was removed by evaporation to prepare a composite insulating material having a thickness of about 0.2 mm. The resulting composite material was cut to give composite tape 25 mm wide and containing 25% of the binder.

The composite tape was wrapped around a coil conductor so as to give eight layers by half wrap and subsequently impregnated under reduced pressure with an impregnating varnish prepared by mixing 100 parts of an epoxy compound (DER—332), 800 parts of an isocyanate compound (L—MDI) and 4.5 parts of 2PZ—CN as catalyst. The impregnated tape was cured at 100°—150°C for 15 hours and at 200°—230°C for 5 hours to give an electric winding.

Thermal resistance, short time thermal resistance and water resistance of the electric wninding were tested in the same manner as described in Exmple 1 to give the same results as were obtained in Example 16.

## Claims

1. A winding for an electric rotating machine having a plurality of layers of a sheet-form composite insulating material (2) wrapped around a conductor (1) and a cured resin impregnated into said layers, said cured resin being an epoxy-isocyanate varnish, said sheet-form composite insulating material comprising two or more sheet-form insulating materials bonded by a binder characterized in that said binder comprises a mixture of a condensation polymerization type silicone resin having hydroxyl groups and an addition polymerization type silicone resin.

2. An electric winding according to claim 1, wherein the binder comprises 50 to 95% by weight of the condensation polymerization type silicone resin and 50 to 5% by weight of the addition polymerization type silicone resin.

3. An electric winding according to claim 1 or claim 2 wherein the hydroxyl group content in the condensation polymerization type silicone resin is 0.2 to 1% by weight.

4. An electric winding according to any one of claims 1 to 3 wherein the binder content is 5 to 35% by weight based on the total weight of the composite insulating material and the binder.

5. An electric winding according to any one of the preceding claims wherein the binder further contains a silane coupling agent.

6. An electric winding according to any one of the preceding claims wherein the epoxy-isocyanate resin comprises 1.5 equivalents or more of polyfunctional isocyanate compound per equivalent of polyfunctional epoxy compound.

7. An electric winding according to claim 1 wherein the composite insulating material is composed of at least one of glass cloth, polyimide film, aromatic polyamide sheet and assembly mica sheet.

8. A process for producing an electric winding according to any one of the preceding claims comprising the steps of wrapping around the conductor the said plurality of layers of sheet-form composite insulating material comprising two or more sheet-form insulating materials bonded by a binder, impregnating the layers with the said impregnating varnish of an epoxy-isocyanate resin and curing the resulting impregnated varnish, wherein said binder is a mixture of a condensation polymerization type silicone resin having hyroxyl groups and an addition polymerization type silicone resin.

9. A process according to claim 8 wherein the binder solution contains an effective amount of a curing catalyst for the epoxy-isocyanate resin.

10. A process for producing an electric winding which comprises

bonding assembly mica sheet with at least one insulating sheet having at least one class H thermal resistance using an organic solvent solution of a binder comprising 20% by weight of an addition polymerization type silicon resin containing a peroxide in an amount of 0.1 to 1 part by weight based on 100 parts by weight of the addition polymerization type silicone resin and 80% by weight of a condensation polymerization type silicone resin having a hydroxyl group content of 0.2 to 1% by weight to form a composite insulating tape having a binder content of 5 to 35% by weight based on the total weight of the tape including the binder after removal of the solvent by evaporation,

wrapping the said composite insulating tape around an electric conductor,

impregnating the wrapped composite insulating tape with an imprgnating varnish of an epoxy-isocyanate resin containing 2.5 to 25 equivalents of isocyanate compound per equivalent of epoxy compound and a curing catalyst for forming isocyanurate and oxazolidone rings in an amount of 1 to 5 parts by weight based on 100 parts by weight of the epoxy-isocyanate resin, and

curing the resulting impregnated composite insulating tape by heating.

11. A process according to claim 10 wherein said insulating sheet is composed of glass fibers, or polyimide or aromatic polyamide fibers.

12. A process according to claim 10 or 11 wherein the epoxy-resin contains 5 to 10 equivalents of the isocyanate compound per equivalent of the epoxy compound and the curing catalyst is an imidazole compound.

**Revendications**

1. Enroulement pour une machine électrique rotative avec une pluralité de couches d'un matériau isolant composite en forme de feuille (2) enroulé autour d'un conducteur (1) et une résine durcie imprégnant lesdites couches, ladite résine durcie étant un vernis d'époxyisocyanate, ledit matériau isolant composite en forme de feuille comprenant deux feuilles ou plus de matériau isolant liées par un agent de liaison, caractérisé par le fait que ledit agent de liaison comprend un mélange d'une résine silicone du type à polymérisation de condensation ayant des groupes hydroxyles et d'une résine silicone du type à polymérisation d'addition.

2. Enroulement électrique selon la revendication 1, caractérisé par la fait que l'agent de liaison comprend 50 à 95% en poids de la résine silicone du type à polymérisation de condensation et 50 à 5% en poids de la résine silicone du type à polymérisation d'addition.

3. Enroulement électrique selon la revendication 1 ou la revendication 2, caractérisé par le fait que le contenu du groupe hydroxyle dans la résine silicone du type à polymérisation de condensation est de 0,2 à 1% en poids.

4. Enroulement électrique selon l'une quelconque des revendications 1 à 3, caractérisé par le fait que le contenu de l'agent de liaison est de 5 à 35% en poids du poids total du matériau isolant composite et de l'agent de liaison.

5. Enroulement électrique selon l'une quelconque des revendications précédentes, caractérisé par le fait que l'agent de liaison contient en outre un silane comme agent de couplage.

6. Enroulement électrique selon l'une quelconque des revendications précédentes, caractérisé par le fait que la résine époxy-isocyanate comprend 1,5 équivalents ou plus d'un composé isocyanate polyfonctionnel par équivalent de composé époxy polyfonctionnel.

7. Enroulement électrique selon la revendication 1, caractérisé par le fait que le matériau isolant composite est composé d'au moins un des produits suivants: toile-verre, film polyamide, feuille polyamide aromatique et assemblage de feuilles de mica.

8. Procédé de fabrication d'un enroulement électrique selon l'une quelconque des revendications précédentes, comprenant les étapes d'enroulement autour du conducteur de ladite pluralité de couches de matériau isolant composite en forme de feuille comprenant deux feuilles ou plus de matériau isolant liées par un agent de liaison, d'impregnation des couches avec ledit vernis d'imprégnation de résine d'époxy-isocyanate et de durcissement du vernis d'imprégnation résultant, caractérisé par le fait que ledit agent de liaison est un mélange d'une résine silicone du type à polymérisation de condensation ayant des groupes hydroxyles et d'une résine silicone du type à polymérisation d'addition.

9. Procédé selon la revendication 8, caractérisé par le fait que la solution d'agent de liaison contient une quantité effective d'un catalyseur de durcissement pour la résine époxy-isocyanate.

10. Procédé de fabrication d'un enroulement électrique, comprenant

liaison d'un assemblage de feuilles de mica avec au moins une feuille isolante ayant au moins une résistance thermique de la classe H en utilisant une solution d'un solvant organique d'un agent de liaison comprenant 20% en poids d'une résine silicone du type à polymérisation d'addition contenant un péroxyde dans une quantité de 0,1 à 1 partie en poids pour 100 parties en poids de la résine silicone du type à polymérisation d'addition et 80% en poids d'une résine silicone du type à polymérisation de condensation ayant un contenu d'un groupe hydroxyle de 0,2 à 1% en poids pour former une bande isolante composite avec un contenu d'un agent de liaison de 5 à 35% en poids basé sur le poids total de la bande comprenant l'agent de liaison après enlèvement du solvant par évaporation,

enroulement de ladite bande isolante composite autour d'un conducteur électrique,

imprégnation de la bande isolante composite enroulée avec un vernis d'imprégnation d'une résine époxy-isocyanate contenant 2,5 à 25 équivalents de composé isocyanate par équivalent de composé époxy et un catalyseur de durcissement pour former des anneaux d'isocyanurate et d'oxazolidone dans une quantité de 1 à 5 parties en poids sur la base de 100 parties en poids de la résine époxy-isocyanate et

durcissement de la bande isolante composite imprégnée résultante par chauffage.

11. Procédé selon la revendication 10, caractérisé par le fait que ladite feuille isolante est composée de fibres de verre ou de fibres polyimide ou polyamide aromatiques.

12. Procédé selon la revendication 10 ou la revendication 11, caractérisé par le fait que la résine époxyisocyanate contient 5 à 10 équivalents de composé isocyanate par équivalent de composé époxy- et que le catalyseur de durcissement est un composé imidazole.

**Patentansprüche**

1. Wicklung für eine rotierende elektrische Maschine mit einer Mehrzahl von mit einem gehärteten Harz imprägnierten Schichten aus einem blattförmigen zusammengesetzten Isoliermaterial (2), welches um einen Leiter (1) gewickelt ist, wobei das gehärtete Harz ein Epoxy-Isocyanat-Lack ist und das blattförmige zusammengesetzte Isoliermaterial zwei oder mehr Folien aus isolierendem Material enthält, welche durch ein Bindemittel verbunden sind, dadurch gekennzeichnet, dass das Bindemittel aus einer Mischung eines Silikonharzes des Kondensationspolymerisation-Typs mit Hydroxyl-Gruppen und eines Silikonharzes des Additionspolymerisation-Typs besteht.

2. Elektrische Wicklung gemäss Anspruch 1, dadurch gekennzeichnet, dass das Bindemittel nach Gewicht 50 bis 95% Silikonharz des Kondensationspolymerisation-Typs und nach Gewicht 50 bis 5% Silikonharz des Additionspolymerisation-Typs enthält.

3. Elektrische Wicklung gemäss Anspruch 1 oder Anspruce 2, dadurch gekennzeichnet, dass der Anteil der Hydroxyl-Gruppe im Silikhonharz des Kondensationspolymerisation-Typs nach Gewicht zwischen 0,2 und 1% liegt.

4. Elektrische Wicklung gemäss einem der Ansprüche 1 bis 3, dadurch gekennzeichnet, dass der Anteil an Bindemittel nach Gewicht 5 bis 35% basierend auf dem Totalgewicht des zusammengesetzten Isoliermaterials und des Bindemittels ist.

5. Elektrische Wicklung nach irgendeinem der vorhergehenden Ansprüche, wobei das Bindemittel ausserdem ein Silanverbindungsmittel enthält.

6. Elektrische Wicklung gemäss irgendeinem der vorhergehenden Ansprüche, dadurch gekennzeichnet, dass das Epoxy-Isocyanatharz 1,5 Aequivalente oder mehr einer polyfunktionnellen Isocyanat-Verbindung pro Aequivalent der polyfunktionnellen Epoxy-Verbindung enthält.

7. Elektrische Wicklung gemäss Anspruch 1, dadurch gekennzeichnet, dass das zusammengesetzte Isoliermaterial aus mindestens einem der Stoffe Glasleinwand, Polymidfilm, aromatische Polyamidfolie und zusammengesetzte Glimmerfolie besteht.

8. Verfahren zur Herstellung einer elektrischen Wicklung gemäss irgendeinem der vorhergehenden Ansprüche, umfassend die Stufen von Wickeln um den Leiter der erwähnten Mehrzahl von Schichten aus blattförmigem zusammegesetzem Isoliermaterial, welche zwei oder mehr Folien von durch ein Bindemittel verbundenem Isoliermaterial enthalten, Imprägnieren der Schichten mit dem erwähnten imprägnierenden Lack aus einem Epoxy-Isocyanatharz und Aushärten des resultierenden imprägnierten Lacks, wobei das Bindemittel eine Mischung eines Silikonharzes des Kondensationspolymerisation-Typs und eines Silikonharzes des Additionspolymerisation-Typs ist.

9. Verfahren gemäss Anspruch 8, worin die Bindemittel-Lösung eine wirksame Quantität des Aushärtungs-Katalysators für das Epoxy-Isocyanatharz enthält.

10. Verfahren zur Herstellung einer elektrischen Wicklung, umfessend die Verbindung von zusammengesetzter Glimmerfolie mit mindestens einer isolierenden Folie mit einem thermischem Widerstand mindestens der Klasse H durch Anwendung eines organischen Lösemittels eines Bindemittels, das nach Gewicht 20% eines Silikonharzes des Additionspolymerisation-Typs mit 0,1 bis 1 Gewichtsanteil eines Peroxyds auf 100 Gewichtsanteile de Silikonharzes des Additionspolymerisation-Typs und nach Gewicht 80% eines Silikonharzes des Kondensationspolymerisation-Typs mit 0,2 bis 1% nach Gewicht einer Hydroxyl-Gruppe enthält, um ein zusammengesetztes isolierendes Band zu bilden mit einem Gehalt eines Bindemittels von 5 bis 35% nach Gewicht auf das Totalgewicht des Bandes und des Bindemittels nach Entfernen des Lösemittels durch Verdunstrung,
Wickeln des zusammengesetzten isolierenden Bandes um einen elektrischen Leiter,
Imprägnieren des umwickelten zusammengesetzten isolierenden Bandes mit einem imprägnierenden Lack aus einem Epoxy-Isocyanat, das 2,5 bis 25 Aequivalente Isocyanatharz pro Aequivalent Epoxyverbindung und einen Aushärtungs-Katalysator enthält, um Isocyanatund Oxazolidonringe in einer Menge von 1 bis 5 Gewichtsanteilen basierend auf 100 Gewichtsanteilen des Epoxy-Isocyanatharzes zu bilden, und
Aushärtung des resultierenden imprägnierten zusammengesetzten isolierenden Bandes durch Erhitzen.

11. Verfahren gemäss Anspruch 10, worin die isolierende Folie aus Glasfasern oder Fasern aus Polyimid oder aromatischen Polyamid besteht.

12. Verfahren gemäss Anspruch 10 oder 11, worin das Epoxy-Isocyanatharz 5 bis 10 Aequivalente der Isocyanat-Verbindung pro Aequivalent der Epoxy-Verbindung enthält, und der Aushärtungs-Katalysator eine Imidazol-Verbindung ist.

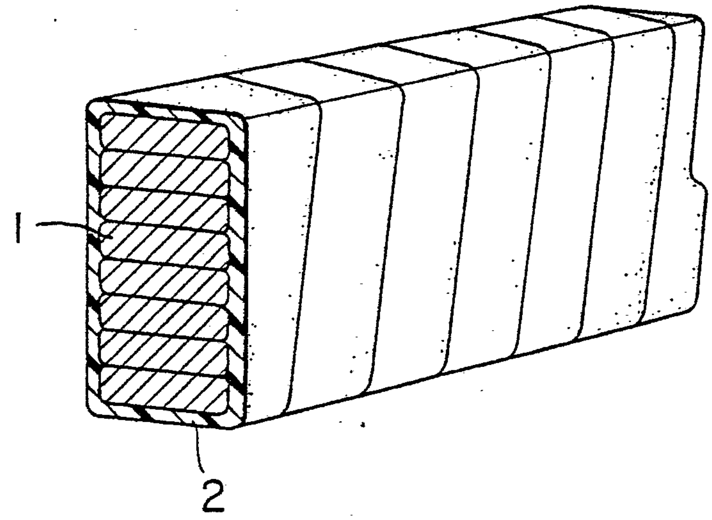
1
2